# EUROPEAN PATENT APPLICATION

(11) **EP 4 503 699 A1**
(43) Date of publication of application: **05.02.2025**
(21) Application number: 22934044.3
(22) Date of filing: 29.03.2022
(51) Int. Cl.: H04W 24/02, H04W 28/24

(54) **SERVICE PROCESSING METHOD AND SERVICE PROCESSING DEVICE**

(71) Applicant: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN)
(74) Representative: Stöckeler, Ferdinand
(86) International application number: PCT/CN2022/083861
(87) International publication number: WO 2023/184189

(57) **Abstract**

The present disclosure relates to a service processing method and a service processing device. The service processing method is applied to an access and mobility management function (AMF). The method comprises: determining policy control function (PCF) selection reference information, the PCF selection reference information comprising at least one of extended reality media (XRM) service indication information and an XRM group identifier; and selecting a PCF on the basis of at least one of the XRM service indication information and the XRM group identifier. By means of the present disclosure, the PCF matching at least one of the XRM service indication information and the XRM group identifier can be selected for a terminal executing an XRM service, and the coordination requirement of the XRM service and multi-modal data is further supported.

## Description

### FIELD

The present disclosure relates to the field of a communication technology, and particularly to a method and apparatus for processing a service.

### BACKGROUND

With the development of the communication technology, it has been increasingly applied of an extended reality (XR) service such as a virtual reality (VR) service and an augmented reality (AR) service, where the XR service is sometimes referred to as an extended reality media (XRM) service.

The XRM service involves a multimodal data stream. Multimodal data involves multiple data streams of one or more devices, where the respective data streams of the multiple data streams are often correlated to each other. The XRM service requires a 5G system (5GS) to comprehensively take a service-related data stream quality of service (QoS) characteristic and transmission policy coordination into account, so as to ensure that respective service parameters of multiple devices are all fulfilled and coordinated consistently. It is a prerequisite to manage and coordinate an access and mobility association requirement among multiple devices applying the XRM service for ensuring the XRM service data stream QoS and transmission strategy coordination.

### SUMMARY

To overcome a problem existing in the related art, the present disclosure provides in embodiments a method for processing a service and an apparatus for processing the service.

According to a first aspect of embodiments of the present disclosure, there is provided a method for processing a service, performed by an access and mobility management function (AMF), including:
determining policy control function (PCF) selection reference information, where the PCF selection reference information includes at least one of extended reality media (XRM) service indication information and an XRM group identifier; selecting a PCF based on at least one of the XRM service indication information and the XRM group identifier.

In an embodiment, selecting a PCF based on at least one of the XRM service indication information and the XRM group identifier includes:
determining a terminal supporting the same XRM service capability or the same XRM group identifier, based on at least one of the XRM service indication information and the XRM group identifier; selecting the same PCF for the terminal(s) supporting the same XRM service capability or the same XRM group identifier.

In an embodiment, selecting a PCF based on at least one of the XRM service indication information and the XRM group identifier includes:
selecting the PCF based on a local policy, where the local policy includes at least one of the XRM service indication information and the XRM group identifier; or obtaining subscription data, and selecting the PCF based on the subscription data, where the subscription data comprises at least one of the XRM service indication information and the XRM group identifier.

In an embodiment, selecting a PCF based on at least one of the XRM service indication information and the XRM group identifier includes:
obtaining the PCF selected by a network repository function (NRF) based on configuration information, where the configuration information includes at least one of the XRM service indication information and the XRM group identifier; or obtaining the PCF selected by the NRF based on the subscription data, where the subscription data includes at least one of the XRM service indication information and the XRM group identifier.

In an embodiment, the NRF stores registration information of the PCF and the PCF selection reference information, the PCF selection reference information includes at least one of the XRM service indication information and the XRM group identifier, and the NRF marks the PCF as an available PCF.

In an embodiment, selecting the same PCF for the terminal(s) supporting the same XRM service capability or the same XRM group identifier includes:
in response to a presence of a terminal with an already selected PCF among the terminal(s) supporting the same XRM service capability or the same XRM group identifier, taking the already selected PCF as the PCF for the terminal(s) supporting the same XRM service capability or the same XRM group identifier.

In an embodiment, selecting the same PCF for the terminal(s) supporting the same XRM service capability or the same XRM group identifier includes:
in response to an absence of a terminal with an already selected PCF among the terminal(s) supporting the same XRM service capability or the same XRM group identifier, selecting the PCF on the basis of a PCF selection policy, and taking the PCF selected as the PCF for the terminal(s) supporting the same XRM service capability or the same XRM group identifier.

In an embodiment, the method further includes: performing a terminal policy association for a terminal with an already selected PCF, and taking the already selected PCF as the PCF for another terminal, wherein the terminal policy association is performed for the another terminal.

In an embodiment, the method further includes: sending, to the PCF, an access management (AM) policy control association creation request message, where the AM policy control association creation request message includes at least one of the XRM service indication information and the XRM group identifier.

In an embodiment, the method further includes: receiving at least one of the following messages sent by the PCF:
an AM policy control association creation response message;
access and mobility policy association information;
a policy control request for an AM policy association;
an event subscription report.

In an embodiment, the method further includes: installing the access and mobility policy association information, and subscribing a policy control trigger request upon receiving a subscription request.

In an embodiment, the method further includes: sending at least one of the following to a radio access network:
a radio access type frequency selection priority index;
a user equipment-aggregated maximum bit rate;
a list of user equipment-slice-maximum bit rate;
a service area restriction.

In an embodiment, the PCF includes a local PCF or a roaming PCF.

In an embodiment, the XRM service indication information includes multiple different pieces of XRM service indication information of the same terminal.

According to a second aspect of embodiments of the present disclosure, there is provided a method for processing a service, performed by a PCF, including:
receiving an AM policy control association creation request message sent by an AMF, where the AM policy control association creation request message includes at least one of XRM service indication information and an XRM group identifier.

In an embodiment, the method further includes: sending at least one of the following messages to the AMF:
an AM policy control association creation response message;
access and mobility policy association information;
a policy control request for an AM policy association;
an event subscription report.

In an embodiment, the method further includes: sending a registration request to a NRF, where the registration request includes PCF related information.

In an embodiment, the method further includes: sending the access and mobility policy association information, to a binding support function (BSF), where the access and mobility policy association information includes at least one of a terminal identifier, a PCF identifier, the XRM service indication information and the XRM group identifier.

According to a third aspect of embodiments of the present disclosure, there is provided a method for processing a service, performed by a NRF, including:
selecting a PCF based on at least one of XRM service indication information and an XRM group identifier; sending the PCF selected to an AMF.

In an embodiment, selecting a PCF based on at least one of XRM service indication information and an XRM group identifier includes:
selecting the PCF based on configuration information, where the configuration information includes at least one of the XRM service indication information and the XRM group identifier; or selecting the PCF based on subscription data, where the subscription data includes at least one of the XRM service indication information and the XRM group identifier.

In an embodiment, the method further includes: receiving a registration request of the PCF, where the registration request includes PCF related information.

In an embodiment, the method further includes: storing registration information of the PCF and PCF selection reference information, and marking the PCF as an available PCF, where the PCF selection reference information includes at least one of the XRM service indication information and the XRM group identifier.

According to a fourth aspect of embodiments of the present disclosure, there is provided an apparatus for processing a service, including:
a processing unit, configured to determine policy control function (PCF) selection reference information, where the PCF selection reference information includes at least one of extended reality media (XRM) service indication information and an XRM group identifier; and to select a PCF based on at least one of the XRM service indication information and the XRM group identifier.

In an embodiment, the processing unit is configured to select a PCF based on at least one of the XRM service indication information and the XRM group identifier by:
determining a terminal supporting the same XRM service capability or the same XRM group identifier, based on at least one of the XRM service indication information and the XRM group identifier; selecting the same PCF for the terminal(s) supporting the same XRM service capability or the same XRM group identifier.

In an embodiment, the processing unit is configured to select a PCF based on at least one of the XRM service indication information and the XRM group identifier by:
selecting the PCF based on a local policy, where the local policy includes at least one of the XRM service indication information and the XRM group identifier; or obtaining subscription data, and selecting the PCF based on the subscription data, where the subscription data includes at least one of the XRM service indication information and the XRM group identifier.

In an embodiment, the processing unit is configured to select a PCF based on at least one of the XRM service indication information and the XRM group identifier by:
obtaining the PCF selected by a network repository function (NRF) based on configuration information, where the configuration information includes at least one of the XRM service indication information and the XRM group identifier; or obtaining the PCF selected by the NRF based on the subscription data, where the subscription data includes at least one of the XRM service indication information and the XRM group identifier.

In an embodiment, the NRF stores registration information of the PCF and the PCF selection reference information, the PCF selection reference information includes at least one of the XRM service indication information and the XRM group identifier, and the NRF marks the PCF as an available PCF.

In an embodiment, the processing unit is configured to select the same PCF for the terminal(s) supporting the same XRM service capability or the same XRM group identifier by:
in response to a presence of a terminal with an already selected PCF among the terminal(s) supporting the same XRM service capability or the same XRM group identifier, taking the already selected PCF as the PCF for the terminal(s) supporting the same XRM service capability or the same XRM group identifier.

In an embodiment, the processing unit is configured to select the same PCF for the terminal(s) supporting the same XRM service capability or the same XRM group identifier by:
in response to an absence of a terminal with an already selected PCF among the terminal(s) supporting the same XRM service capability or the same XRM group identifier, selecting the PCF on the basis of a PCF selection policy, and taking the PCF selected as the PCF for the terminal(s) supporting the same XRM service capability or the same XRM group identifier.

In an embodiment, the processing unit is further configured to perform a terminal policy association for a terminal with an already selected PCF, and to take the already selected PCF as the PCF for another terminal, where the terminal policy association is performed for the another terminal.

In an embodiment, the apparatus for processing a service further includes a sending unit, configured to send, to the PCF, an access management (AM) policy control association creation request message, where the AM policy control association creation request message includes at least one of the XRM service indication information and the XRM group identifier.

In an embodiment, the apparatus for processing a service further includes a receiving unit, configured to receive at least one of the following messages sent by the PCF:
an AM policy control association creation response message;
access and mobility policy association information;
policy control request for an AM policy association;
an event subscription report.

In an embodiment, the processing unit is further configured to install the access and mobility policy association information, and to subscribe a policy control trigger request upon receiving a subscription request.

In an embodiment, the apparatus for processing a service further includes a sending unit, configured to send at least one of the following to a radio access network:
a radio access type frequency selection priority index;
a user equipment-aggregated maximum bit rate;
a list of user equipment-slice-maximum bit rate;
a service area restriction.

In an embodiment, the PCF includes a local PCF or a roaming PCF.

In an embodiment, the XRM service indication information includes multiple different pieces of XRM service indication information of the same terminal.

According to a fifth aspect of embodiments of the present disclosure, there is provided an apparatus for processing a service, including:
a receiving unit, configured to receive an AM policy control association creation request message sent by an AMF, where the AM policy control association creation request message includes at least one of XRM service indication information and an XRM group identifier.

In an embodiment, the apparatus for processing a service further includes a sending unit, configured to send at least one of the following messages to the AMF:
an AM policy control association creation response message;
access and mobility policy association information;
a policy control request for an AM policy association;
an event subscription report.

In an embodiment, the apparatus for processing a service further includes a sending unit, configured to send a registration request to a NRF, where the NRF includes PCF related information.

In an embodiment, the apparatus for processing a service further includes a sending unit, configured to send the access and mobility policy association information, to a binding support function (BSF), where the access and mobility policy association information includes at least one of a terminal identifier, a PCF identifier, the XRM service indication information and the XRM group identifier.

According to a sixth aspect of embodiments of the present disclosure, there is provided an apparatus for processing a service, including:
a processing unit, configured to select a PCF based on at least one of XRM service indication information and an XRM group identifier;
a sending unit, configured to send the PCF selected to an AMF.

In an embodiment, the processing unit is configured to select a PCF based on at least one of XRM service indication information and an XRM group identifier by:
selecting the PCF based on configuration information, where the configuration information includes at least one of the XRM service indication information and the XRM group identifier; or selecting the PCF based on subscription data, where the subscription data includes at least one of the XRM service indication information and the XRM group identifier.

In an embodiment, the apparatus for processing a service further includes a receiving unit, configured to receive a registration request of the PCF, where the registration request includes PCF related information.

In an embodiment, the processing unit is further configured to store registration information of the PCF and PCF selection reference information, and to mark the PCF as an available PCF, where the PCF selection reference information includes at least one of the XRM service indication information and the XRM group identifier.

According to a seventh aspect of embodiments of the present disclosure, there is provided an apparatus for processing a service, including:
a processor;
a memory for storing executable instructions for the processor,
where the processor is configured to perform the method as described in a first aspect or in any one of embodiments of the first aspect.

According to an eighth aspect of embodiments of the present disclosure, there is provided an apparatus for processing a service, including:
a processor;
a memory for storing executable instructions for the processor,
where the processor is configured to perform the method as described in a second aspect or in any one of embodiments of the second aspect.

According to a ninth aspect of embodiments of the present disclosure, there is provided an apparatus for processing a service, including:
a processor;
a memory for storing executable instructions for the processor,
where the processor is configured to perform the method as described in a third aspect or in any one of embodiments of the third aspect.

According to a tenth aspect of embodiments of the present disclosure, there is provided a computer storage medium having stored therein instructions that, when executed by a processor, implement a method as described in a first aspect or in any one of embodiments of the first aspect.

According to an eleventh aspect of embodiments of the present disclosure, there is provided a computer storage medium having stored therein instructions that, when executed by a processor, implement the method as described in a second aspect or in any one of embodiments of the second aspect.

According to a twelfth aspect of embodiments of the present disclosure, there is provided a computer storage medium having stored therein instructions that, when executed by a processor, implement the method as described in a third aspect or in any one of embodiments of the third aspect.

The technical solutions provided by embodiments of the present disclosure may include the following beneficial effects: a terminal executing the XRM service is provided with a matched PCF which is selected on the basis of at least one of the XRM service indication information and the XRM group identifier, thereby supporting collaborative requirement for the XRM service and the multimodal data.

It should be understood that both the foregoing general description and the following detailed description are merely illustrative and explanatory, and shall not be construed to limit the present disclosure.

### BRIEF DESCRIPTION OF THE DRAWINGS

The drawings are incorporated into the specification and form a part of the specification. They illustrate embodiments in accordance with the present disclosure and are used together with the specification to explain the principles of the present disclosure.
FIG. 1 is a schematic diagram showing a communication system according to an illustrative example.
FIG. 2 is a flow chart showing a method for processing a service according to an illustrative example.
FIG. 3 is a flow chart showing an approach of selecting a PCF based on at least one of the XRM service indication information and an XRM group identifier according to an illustrative example.
FIG. 4 is a flow chart showing an approach of selecting a PCF based on at least one of the XRM service indication information and the XRM group identifier according to an illustrative example.
FIG. 5 is a schematic diagram showing a process of creation of an AM policy Association according to an illustrative example.
FIG. 6 is a flow chart showing a method for processing a service according to an illustrative example.
FIG. 7 is a flow chart showing a method for processing a service according to an illustrative example.
FIG. 8 is a block diagram showing an apparatus for processing a service according to an illustrative example.
FIG. 9 is a block diagram showing an apparatus for processing a service according to an illustrative example.
FIG. 10 is a block diagram showing an apparatus for processing a service according to an illustrative example.
FIG. 11 is a block diagram showing an apparatus for processing a service according to an illustrative example.

### DETAILED DESCRIPTION

Embodiments will be described in detail herein, examples of which are illustrated in the accompanying drawings. When the following description refers to the accompanying drawings, the same or similar elements may be denoted by the same numerals in different accompanying drawings, unless otherwise indicated. The embodiments described in the following examples do not represent all the embodiments consistent with the present disclosure.

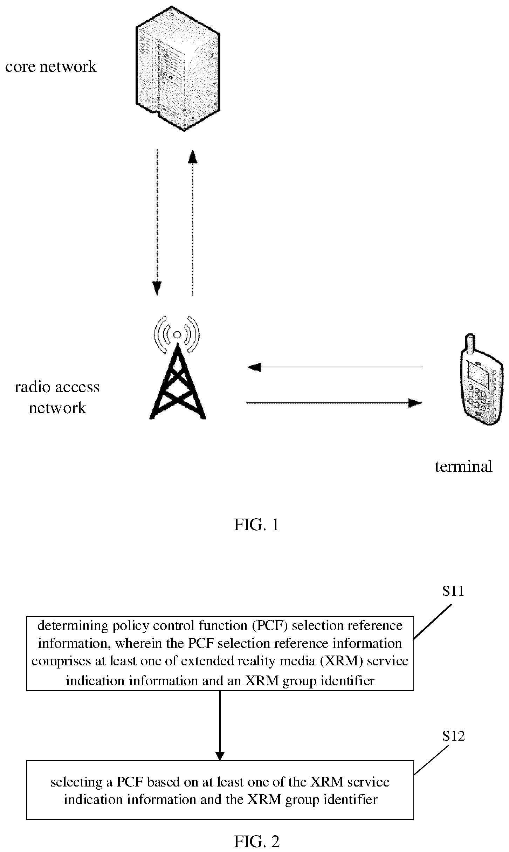

The method for processing a service provided in an example of the present disclosure can be applied to a wireless communication system as shown in FIG. 1. As shown in FIG. 1, the mobile station is connected to a radio access network through radio access network equipment (such as a base station), together with which data backward and forward transmissions are achieved for various communication services.

It should be noted that the wireless communication system is a network for providing a wireless communication function. The wireless communication system can employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. Depending on a factor for example a capacity, a rate, and a latency of different networks, the network can be categorized into a 2G (generation) networks, a 3G networks, a 4G networks, or a future evolved networks such as a 5G networks. The 5G network can also be referred to as a New Radio (NR). For convenience of description, in the present disclosure a wireless communication network may be simply abbreviated as the network or a system somewhere. The network in the present disclosure may include the Radio Access Network (RAN) and the Core Network (CN). The network includes network equipment, which can be a radio access network node, a core network function, and the like. The radio access network node may also be referred to as the base station. The network may provide a network service to a terminal through the network equipment, different operators may provide different network services to the terminal, which may be understood as different operators corresponding to different operator networks.

In a 5GS system, there is a device that manages and coordinates an access and mobility association requirement for the radio access network and the terminal. For example, the core network function includes an access and mobility management function (AMF), a network repository function (NRF), and a policy control function (PCF). Of course, the core network function also includes other types of equipment, which are not listed one by one in the examples of the present disclosure.

In the system, the AMF is primarily configured for mobility management and access management, and can be used to the implement a function other than session management within a mobility management entity (MME) function, such as a lawful interception and an access authorization/authentication function. The NRF is configured to store a network function entity and descriptive information about a service it provides, as well as to support a service discovery, a network element entity discovery, and the like. The PCF is configured to guide a unified policy framework for a network behavior and to provide policy rule information for a control plane function network element, and the like.

The mobile station (MS), also known as user equipment (UE), the terminal, or a mobile terminal (MT), and the like, is a device that provides a user with voice and/or data connectivity. For example, the terminal can be a handheld device, vehicular equipment, and other devices with wireless connectivity. Currently, some examples of the terminal include a mobile phone, a pocket personal computer (PPC), a palmtop computer, a personal digital assistants (PDA), a laptop, a tablet computer, a wearable device, or the vehicular equipment.

In the related art, the terminal supports an extended reality media (XRM) service, which involves a multimodal data stream. A multimodal data describes that the data input from the same terminal or different terminals (including a sensor) for the same service/an application may be output to one or more destination terminals. In other words, the XRM service can be multiple XRM services supported by a single terminal, or one or more XRM services supported by multiple terminals. It would also be understood as a service involving multiple data streams, where respective data streams of the multimodal data are correlated to each other to a certain or even great extent, such as synchronization of audio and video streams, synchronization of tactile sense and visual sense, and the like. There are some common characteristics for the data streams as such of this kind of the media service, for respective data streams, and for requirements on the network transmission by these service data streams . The effective identification and utilization of these characteristics will be more conducive to the transmission and control of the network and the service, and also more beneficial to service assurance and user experience.

To achieve the identification and coordination of the common characteristics among respective service data streams in the XRM service, it is required for the 5GS system to comprehensively consider whether the service-related data stream QoS characteristics, i.e., the parameters such as a delay critical guaranteed bit rate (delay critical GBR), a guaranteed flow bit rate (GFBR), a packet delay budget (PDB), and a default maximum data burst volume (MDBV), are all fulfilled and coordinated consistently, specifically whether consistency of multiple terminals applying the XRM service is guaranteed in terms of QoS authorization and execution.

It is the prerequisite to manage and coordinate the access and mobility association requirement among multiple devices applying the XRM service for ensuring the XRM service data stream QoS and the transmission strategy coordination, e.g., the consistency and change coordination of the Index to Radio Access Type (RAT)/Frequency Selection Priority (RFSP Index) provided by the AMF to the RAN among multiple terminals; how to coordinate the service area restrictions (SAR), and how PCF modifies the service area restrictions at any time as an operator policy or a Tracking Area ID (TAI) changes, while ensuring real-time coordination among multiple terminals without any conflict. Currently, there is no established mechanism for the 5GS system to support the aforementioned requirements for the XRM service and the multimodal service among the multiple terminals, for supporting these functional characteristics of the XRM service.

In view of the above, the present disclosure provides in embodiments a method for processing a service which enhances a process of the access and mobility policy Association, and selects a policy control function (PCF) based on the XRM service supported by the terminal, so that the PCF selected supports the collaborative requirement of the XRM service and the multimodal data.

In an embodiment, for the process of the AM Policy Association in an example of the present disclosure, PCF selection reference information includes at least one of XRM service indication information and an XRM group identifier (ID). For example, the PCF selection reference information includes the XRM service indication and/or the XRM group ID, i.e., includes the XRM service indication, or the XRM group ID, or the XRM service indication and the XRM group ID.

The XRM service indication is configured to indicate whether the XRM service is supported. In specific, the XRM service indication may be configured to indicate that the XRM service is supported by one or more terminals. Alternatively, the XRM service indication may be configured to indicate that the XRM service is supported by the network equipment.

The XRM group ID is configured to indicate a terminal group supporting the XRM service, where the terminal group may include one or more terminals.

In an example of the present disclosure, when selecting the PCF in the process of the AM Policy Association, the PCF is selected on the basis of the XRM service indication and the XRM group ID.

FIG. 2 is a flow chart showing a method for processing a service according to an illustrative example. As shown in FIG. 2, the method for processing a service is performed by an AMF and includes the following steps S11 and S12.

In S11, a PCF selection reference information is determined, where the PCF selection reference information includes at least one of an XRM service indication and an XRM group ID.

In S12, a PCF is selected based on at least one of the XRM service indication and the XRM group ID.

In an example of the present disclosure, the terminal executing the XRM service is provided with a matched PCF which is selected on the basis of at least one of the XRM service indication information and the XRM group identifier, thereby supporting collaborative requirement of the XRM service and the multimodal data.

In an example of the present disclosure, the same PCF is selected for the terminal(s) supporting the same XRM service capability or the same XRM group ID.

The present disclosure provides in embodiments a method for processing a service in which the PCF is selected based on at least one of the XRM service indication and the XRM group ID.

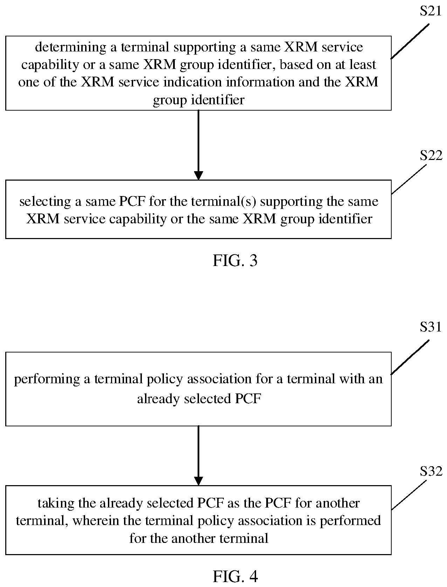

FIG. 3 is a flow chart showing an approach of selecting a PCF based on at least one of the XRM service indication and the XRM group ID according to an illustrative example. As shown in FIG. 3, the method includes the following steps S21 and S22.

In S21, a terminal supporting the same XRM service capability or the same XRM group ID is determined, based on at least one of the XRM service indication and the XRM group ID.

In S22, the same PCF is selected for the terminal(s) supporting the same XRM service capability or the same XRM group ID.

In an embodiment of the present disclosure, the same PCF is selected for the terminal(s) supporting the same XRM service capability or the same XRM group ID, such that the access and mobility policy association is determined and updated for respective terminals supporting the XRM service based on the same PCF, and the terminal(s) supporting the XRM service is(are) guaranteed with the consistency in terms of the access and mobility management policy, thereby supporting the collaborative requirement of the XRM service.

The present disclosure provides in embodiments a method for processing a service in which the PCF is selected by an AMF.

In an embodiment of the present disclosure, the PCF is selected by the AMF based on at least one of the XRM service indication and the XRM group ID.

In an example, when the PCF is selected by the AMF, the AMF takes the XRM service indication and/or the XRM group ID as the PCF selection reference information, thus selecting the PCF for the terminal. For example, the same PCF is selected for the multiple terminals with the same XRM service indication and/or the same XRM group ID, and creation of an AM policy association is performed.

In an embodiment of the present disclosure, on one hand, the AMF may add the XRM service indication and/or the XRM group ID to a local policy, and when the PCF is selected based on the local policy, the XRM service indication and/or the XRM group ID are(is) taken as the PCF selection reference information, thus selecting the PCF for the terminal.

In an embodiment of the present disclosure, on the other hand, the XRM service indication and/or the XRM group ID may also be stored in subscription data of the PCF. The AMF obtains the subscription data and selects the PCF based on the subscription data including the XRM service indication and/or the XRM group ID.

In an embodiment of the present disclosure, the AMF selects the same PCF for the terminal(s) supporting the same XRM service capability or the same XRM group ID.

The AMF may select the same PCF for the terminal(s) supporting the same XRM service capability or the same XRM group ID on the basis of an already selected PCF.

The present disclosure also provides in embodiments a method for processing a service in which the AMF performs the selection of the PCF through a network repository function (NRF), that is, the selection of the PCF is performed by the NRF and the PCF selected is obtained by the AMF.

In an embodiment, the NRF selects the PCF based on configuration information, where the configuration information includes at least one of the XRM service indication and the XRM group ID. The AMF obtains the PCF selected by the NRF based on the configuration information.

In another embodiment, the NRF selects the PCF based on the subscription data, where the subscription data includes at least one of the XRM service indication and the XRM group ID. The AMF obtains the PCF selected by the NRF based on subscription data.

In an embodiment of the present disclosure, when the AMF performs the selection of the PCF through the NRF, the PCF is registered to the NRF and PCF related information (PCF profile) is provided to the NRF. The NRF stores registration information of the PCF and marks the PCF as an available PCF. Furthermore, in an embodiment of the present disclosure, the PCF selection reference information for the AM association PCF selection includes at least one of the XRM service indication and the XRM group ID.

In an embodiment of the present disclosure, the NRF selects the same PCF for the terminal(s) supporting the same XRM service capability or the same XRM group ID.

The NRF may select the same PCF for the terminal(s) supporting the same XRM service capability or the same XRM group ID on the basis of the already selected PCF.

The present disclosure further provides in embodiments a method for processing a service in which the PCF is selected for the terminal(s) supporting the same XRM service capability or the same XRM group ID on the basis of the already selected PCF.

In an embodiment of the present disclosure, the method for processing a service includes selecting the same PCF for the terminal(s) supporting the same XRM service capability or the same XRM group ID on the basis of the already selected PCF.

In an embodiment of the present disclosure, the method for processing a service includes: in response to a presence of a terminal with the already selected PCF among the terminal(s) supporting the same XRM service capability or the same XRM group ID, taking the already selected PCF as the PCF for the terminal(s) supporting the same XRM service capability or the same XRM group ID.

That is, if a terminal with the already selected PCF is present among multiple terminals associated with the XRM service indication or the XRM group ID, the already selected PCF is taken as the PCF for another terminal different from the terminal with the already selected PCF, so that the terminals supporting the same XRM service capability or the same XRM group ID take the same PCF.

The present disclosure further provides in an embodiment a method for processing a service including in response to an absence of a terminal with an already selected PCF among the terminal(s) supporting the same XRM service capability or the same XRM group ID, selecting the PCF on the basis of a PCF selection policy, and taking the PCF selected as the PCF for the terminal(s) supporting the same XRM service capability or the same XRM group ID.

That is, if a terminal with the already selected PCF is absent among multiple terminals associated with the XRM service indication or the XRM group ID, a PCF is selected on the basis of the PCF selection policy, and the PCF selected is taken as the same PCF for the terminals supporting the same XRM service capability or the same XRM group ID.

According to embodiments of the present disclosure, the method for processing a service may be implemented as selecting the same PCF for the terminals supporting the same XRM service capability or the same XRM group ID, thereby supporting the collaboration of the XRM service. In a roaming scenario, the method for processing a service in the above embodiments may be implemented as selecting the same PCF for the terminals supporting the same XRM service capability or the same XRM group ID, thereby supporting the collaboration of the XRM service.

In an embodiment of the present disclosure, the method for processing a service may further include performing a terminal policy association (UE policy association) for the terminal with the already selected PCF.

In an embodiment of the present disclosure, the method for processing a service may further include taking the already selected PCF as the PCF for another terminal, where the terminal policy association is performed for the another terminal.

FIG. 4 is a flow chart showing an approach of selecting a PCF based on at least one of the XRM service indication and the XRM group ID according to an illustrative example. As shown in FIG. 4, the method includes the following steps S31 to S32.

In S31, a terminal policy association is performed for a terminal with an already selected PCF.

In S32, the already selected PCF is taken as the PCF for another terminal, where the terminal policy association is performed for the another terminal.

The already selected PCF is a PCF selected based on at least one of an XRM service indication and an XRM group ID. The PCFs selected for the terminals supporting the same XRM service capability or the same XRM group ID are the same PCF.

In an embodiment, when the terminal policy association is performed for the terminal with the already selected PCF, the already selected PCF is taken as the PCF for another terminal, where the terminal policy association is performed for the another terminal. In an example, an AMF points to the terminal policy association for terminal 1 and terminal 2, respectively, where it is assumed that PCF1 is selected for the terminal 1 and PCF2 is selected for the terminal 2. When the terminal policy association is performed for the terminal 1, the PCF1 is taken as the PCF for another terminal where the terminal policy association is performed for said another terminal. Alternatively, when the terminal policy association is performed for the terminal 2, the PCF2 is taken as the PCF for another terminal where the terminal policy association is performed for said another terminal.

In an embodiment of the present disclosure, the method for processing a service may include performing creation of the AM policy association based on the PCF selected, thereby creating an AM policy control association with the PCF.

In an example, after the PCF is selected by the AMF, the creation of the AM policy association may be performed based on the PCF selected, thereby creating the AM policy control association with the PCF.

When AMF performs the creation of the AM policy Association, an AM policy control association creation (Npcf-AMPolicyControl_Create) request message may be sent to the PCF, and the Npcf-AMPolicyControl_Create request message includes at least one of the XRM service indication and the XRM group ID.

It would be appreciated that in an embodiment of the present disclosure, the AMF may send the Npcf-AMPolicyControl_Create request message to the PCF when it needs to request the PCF to generate a corresponding policy for the terminal based on an operational policy.

The AMF may request the PCF to generate a corresponding policy for the terminal based on an operational policy, in the case of that an "access and mobility policy" of the terminal has not been obtained or the "access and mobility policy" in the AMF has been ineffective.

In an embodiment of the present disclosure, the method for processing a service may include the PCF sending an AM policy control association creation response message (Npcf-AMPolicyControl_Create service response) to the AMF.

In an embodiment of the present disclosure, the method for processing a service may include the AMF sending an AM policy control association creation request message to the PCF, where the AM policy control association creation request message includes at least one of the XRM service indication and the XRM group ID; and the PCF receiving the AM policy control association creation request message including at least one of the XRM service indication and the XRM group ID, and sending the AM policy control association creation response message to the AMF.

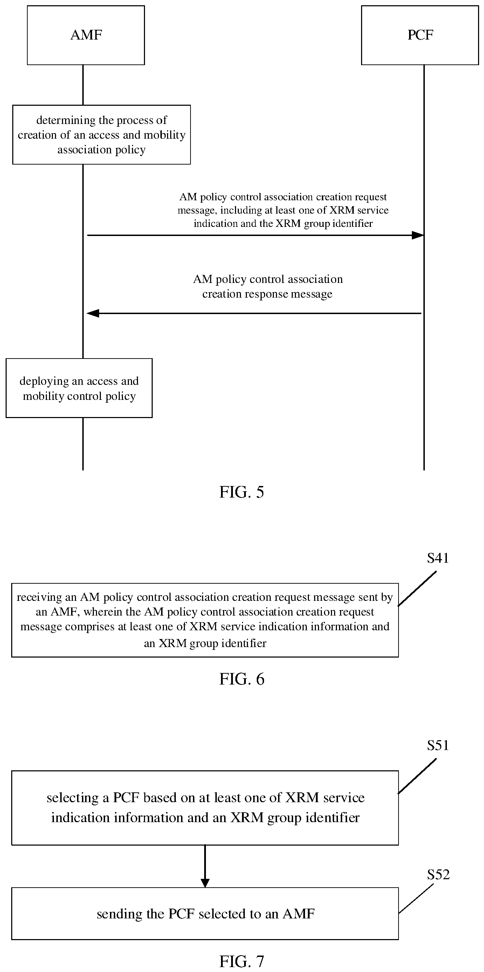

FIG. 5 is a schematic diagram showing a process of creation of an AM policy Association according to an illustrative example. As shown in FIG. 5, the AMF determines performing the process of the creation of the AM policy association and sends an AM policy control association creation request message to the PCF. The AM policy control association creation request message includes at least one of an XRM service indication and an XRM group ID. The PCF receives the AM policy control association creation request message that includes at least one of the XRM service indication and the XRM group ID, and sends an AM policy control association creation response message to the AMF. The AMF deploys an access and mobility control policy based on the AM policy control association creation response message.

It would be appreciated that in an embodiment of the present disclosure, the AM policy control association creation request message sent to the PCF by the AMF may include at least one of the following information in addition to at least one of XRM service indication and the XRM group ID: a terminal identification, an access control-related parameter, a variety of subscribed Aggregated Maximum Bit Rates (AMBRs), an authorized Network Slice Selection Assistance Information (NSSAI) and other information, and may further include information such as an access type, a radio access type, a time zone, and a service network identifier.

In an embodiment of the present disclosure, in addition to receiving the AM policy control association creation response message, the AMF may further receive at least one of the following messages sent by the PCF: access and mobility policy association information; a policy control request for an AM policy association; an event subscription report.

The access and mobility policy association information may be, for example, a service area restriction. The policy control request for an AM policy association may implement a trigger of the policy control request for an AM policy association. The event subscription report enables AMF to report subscription information and is configured to update an access and mobility policy association.

In an embodiment, AMF may install the access and mobility policy association information, and subscribe a policy control trigger request upon receiving a subscription request.

In an embodiment of the present disclosure, the method for processing a service may include the AMF sending radio access network-related information.

In an embodiment of the present disclosure, after performing the process of creation of an AM Policy Association based on the PCF selected, the method for processing a service may further include the AMF sending at least one of the following to a radio access network:
a radio access type frequency selection priority index (RFSP index); a user equipment-aggregated maximum bit rate (UE-AMBR); a list of user equipment-slice-maximum bit rate; a service area restriction.

Further, in an embodiment of the present disclosure, after performing the process of creation of the AM Policy Association based on the PCF selected, the method for processing a service may further include the AMF requesting a subscription notification for a start and end of the AM association process of a terminal.

In an embodiment of the present disclosure, the PCF selected for a session may be same as or different from the PCF selected for the terminal

It would be further appreciated that the process of the AM Policy Association mentioned above in embodiments of the present disclosure may be an initial registration process for the terminal, or a switched reregistration process during an AMF relocation after the PCF has changed.

It would be further appreciated that the process of the AM Policy Association mentioned above in embodiments of the present disclosure may be a process of the AM Policy Association performed by the AMF in a terminal roaming scenario, or a process of the AM Policy Association performed by the AMF in a terminal non-roaming scenario.

In an embodiment of the present disclosure, when the AMF performs the process of the AM Policy Association process in the terminal non-roaming scenario, the PCF selected based on at least one of the XRM service indication and the XRM group ID is a local PCF; when the AMF performs the process of the AM Policy Association in the terminal roaming scenario, the PCF selected based on at least one of the XRM service indication and the XRM group ID is a roaming PCF.

In the above various embodiments of the present disclosure, selecting the same PCF for multiple terminals supporting the same XRM service capability or the same XRM group ID can be understood as the same PCF instance or the same PCF set.

It would be further appreciated that the above description in embodiments of the present disclosure is illustrated based on an example of supporting the XRM service. However, the method for processing a service provided in embodiments of the present disclosure is also applicable to those methods for processing another service involving the multimodal data. That is, the same PCF is selected for multiple terminals supporting the method for processing a service involving the multimodal data, thereby ensuring consistency among multiple terminals applying a service involving the multimodal data in terms of the access and mobility management policy.

According to the method for processing a service provided in the embodiments of the present disclosure, the XRM service indication and/or the XRM group ID are(is) added to process of creation of the AM Policy Association. When performing PCF selection, the PCF selection function in the AMF or the NRF selects the same PCF for multiple terminals supporting the same XRM service capability or the XRM group ID, thereby ensuring consistency among multiple terminals applying the XRM service involving the multimodal data in terms of the access and mobility management policy. Moreover, an access and mobility related policy and a characteristic parameter which are issued and changed for a subsequent PCF can support the collaborative requirement of the XRM service and the multimodal data.

Based on the same concept, the present disclosure further provides in embodiments a method for processing a service performed by a PCF.

FIG. 6 is a flow chart showing a method for processing a service according to an illustrative example. As shown in FIG. 6, the method for processing a service is performed by a PCF and includes the following step S41.

In S41, an AM policy control association creation request message sent by an AMF is received, where the AM policy control association creation request message includes at least one of an XRM service indication and an XRM group ID.

In an embodiment of the present disclosure, the AM policy control association creation request message received by the PCF includes at least one of the XRM service indication and the XRM group ID. Therefore, based on at least one of the XRM service indication and the XRM group ID, an AM policy control association with the PCF is then created and a corresponding AM policy is generated for the terminal.

The AM policy control association creation request message includes at least one of the following in addition to at least one of the XRM service indication and the XRM group ID: a terminal identification, an access control-related parameter, a variety of subscribed Aggregated Maximum Bit Rates (AMBRs), an authorized NSSAI and other information, and may further include information such as an access type, a radio access type, a time zone, and a service network identifier.

Further, in an embodiment of the present disclosure, the method for processing a service may further include PCF sending at least one of the following messages to the AMF: an AM policy control association creation response message, access and mobility policy association information, a policy control request for an AM policy association, an event subscription report.

In an embodiment of the present disclosure, when the AMF performs PCF selection through a NRF, the PCF may further send a registration request to the NRF, where the registration request includes PCF related information, so that the NRF stores the registration information of the PCF and marks the PCF as an available PCF, thereby achieving selection of the same PCF for different terminals based on at least one of XRM service indication and XRM group ID subsequently.

In an embodiment, the method for processing a service may further include PCF sending the access and mobility policy association information to a binding support function (BSF), where the access and mobility policy association information includes at least one of a terminal identification, a PCF identification, an XRM service indication, and the XRM group ID, to update information about the AM Policy Association of the terminal to the BSF.

Based on the same concept, the present disclosure also provides in embodiments a method for processing a service performed by a NRF.

FIG. 7 is a flow chart showing a method for processing a service according to an illustrative example. As shown in FIG. 7, the method for processing a service is performed by a NRF and includes the following steps S51 and S52.

In S51, a PCF is selected based on at least one of an XRM service indication and an XRM group ID.

In S52, the PCF selected is sent to an AMF.

According to embodiments of the present disclosure, a terminal executing the XRM service is provided with a matched PCF which is selected by the NRF based on at least one of the XRM service indication and the XRM group ID, thereby supporting collaborative requirement of the XRM service and multimodal data.

In an embodiment of the present disclosure, the NRF selects the same PCF for terminal(s) supporting the same XRM service capability or the same XRM group ID.

In an embodiment of the present disclosure, the same PCF is selected for the terminal(s) supporting the same XRM service capability or the same XRM group ID, such that the access and mobility policy association is determined and updated for respective terminals supporting the XRM service based on the same PCF, and the terminal(s) supporting the XRM service is(are) guaranteed with the consistency in terms of the access and mobility management policy, thereby supporting the collaborative requirement of the XRM service.

In an embodiment, the NRF selects the PCF based on configuration information, where the configuration information includes at least one of the XRM service indication and the XRM group ID. The NRF sends the PCF selected based on the configuration information to the AMF.

In another embodiment, the NRF selects the PCF based on subscription data, where the subscription data includes at least one of XRM service indication and the XRM group ID. The NRF sends the PCF selected based on the subscription data to the AMF.

In an embodiment of the present disclosure, when performing PCF selection, the NRF receives a registration request of the PCF, where the registration request includes PCF related information.

Further, in an embodiment of the present disclosure, the NRF stores registration information of the PCF and PCF selection reference information, and marks the PCF as an available PCF. In an example of the present disclosure, the PCF selection reference information for an AM association PCF selection includes at least one of the XRM service indication and the XRM group ID.

In an example of the present disclosure, the NRF selects the same PCF for the terminal(s) supporting the same XRM service capability or the same XRM group ID on the basis of the already selected PCF.

On one hand, in response to a presence of a terminal with the already selected PCF among the terminal(s) supporting the same XRM service capability or the same XRM group ID, the already selected PCF is taken as the PCF for the terminal(s) supporting the same XRM service capability or the same XRM group ID. That is, if a terminal with the already selected PCF is present among multiple terminals associated with the XRM service indication or the XRM group ID, the already selected PCF is taken as the PCF for another terminal different from the terminal with the already selected PCF, so that the terminals supporting the same XRM service capability or the same XRM group ID take the same PCF.

On the other hand, in response to an absence of a terminal with an already selected PCF among the terminal(s) supporting the same XRM service capability or the same XRM group ID, the PCF is selected on the basis of a PCF selection policy, and the PCF selected is taken as the PCF for the terminal(s) supporting the same XRM service capability or the same XRM group ID. That is, if a terminal with the already selected PCF is absent among multiple terminals associated with the XRM service indication or the XRM group ID, a PCF is selected on the basis of the PCF selection policy, and the PCF selected is taken as the same PCF for the terminals supporting the same XRM service capability or the same XRM group ID.

According to the method for processing a service provided in embodiments of the present disclosure, when performing the PCF selection, the PCF selection function in the NRF selects the same PCF for multiple terminals supporting the same XRM service capability or the XRM group ID, thereby ensuring consistency among multiple terminals applying the XRM service involving the multimodal data in terms of the access and mobility management policy. Moreover, an access and mobility related policy and a characteristic parameter which are issued and changed for a subsequent PCF can support the collaborative requirement of the XRM service and the multimodal data.

It should be noted that those skilled in the art can understand that the various embodiments/examples involved in the above examples of the present disclosure can be used along or in conjunction with the aforementioned embodiments, both of which are of a similar implementation principle. In an embodiment of the present disclosure, some examples are illustrated in a combined way. Of course, those skilled in the art would understand that such illustrative examples do not limit the embodiments of the present disclosure.

Based on the same concept, the present disclosure further provides in embodiments an apparatus for processing a service.

It can be understood that the apparatus for processing a service provided in the embodiments of the present disclosure includes hardware structures and/or software modules corresponding to the execution of various functions in order to achieve the above functions. Based on the units and algorithm steps of the examples disclosed in the present disclosure, this disclosure can be implemented in the form of hardware or a combination of hardware and computer software. Whether a certain function is executed through hardware or computer software driven hardware depends on the specific application and design constraints of the technical solution. Those skilled in the art can use different methods to achieve the described functions for each specific application, but such implementation should not be considered beyond the scope of the technical solutions disclosed in this embodiment.

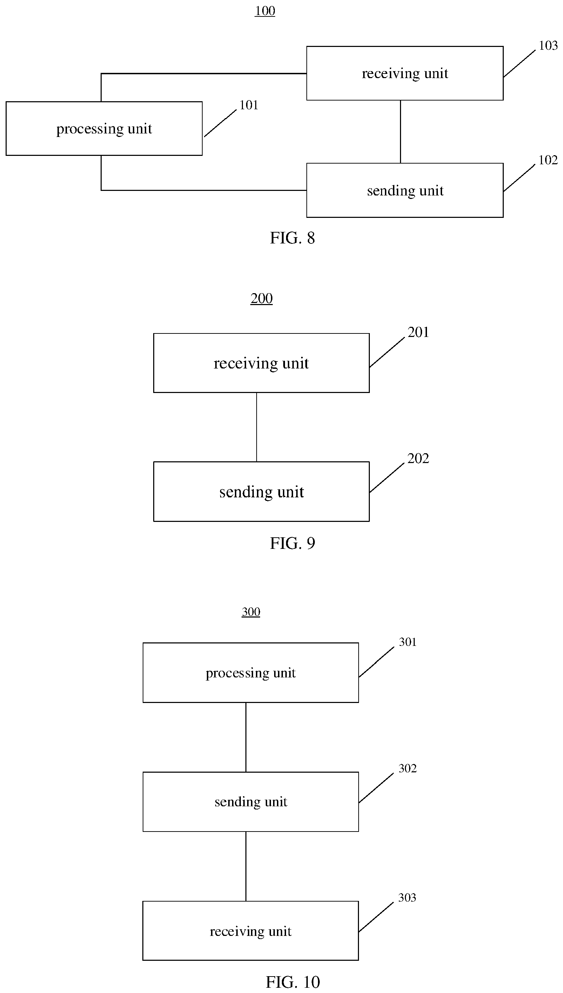

FIG. 8 is a block diagram illustrating an apparatus for processing a service according to an exemplary embodiment. Referring to Figure 8, the apparatus 100 for processing a service is applied to an AMF, includes a processing unit 101.

The processing unit 101, is configured to determine PCF selection reference information, where the PCF selection reference information includes at least one of an XRM service indication information and an XRM group ID; and to select a PCF based on at least one of the XRM service indication information and the XRM group ID.

In an embodiment, the processing unit 101 selects the PCF based on at least one of the XRM service indication and the XRM group ID by:
determining a terminal supporting the same XRM service capability or the same XRM group ID, based on at least one of the XRM service indication information and the XRM group ID; selecting the same PCF for the terminal(s) supporting the same XRM service capability or the same XRM group ID.

In an embodiment, the processing unit 101 selects the PCF based on at least one of the XRM service indication and the XRM group ID by:
selecting the PCF based on a local policy, where the local policy includes at least one of the XRM service indication information and the XRM group ID; or obtaining subscription data, and selecting the PCF based on the subscription data, where the subscription data includes at least one of the XRM service indication information and the XRM group ID.

In an embodiment, the processing unit 101 selects the PCF based on at least one of the XRM service indication and the XRM group ID by:
obtaining the PCF selected by a network repository function (NRF) based on configuration information, where the configuration information includes at least one of the XRM service indication information and the XRM group ID; or obtaining the PCF selected by the NRF based on the subscription data, where the subscription data includes at least one of the XRM service indication information and the XRM group ID.

In an embodiment, the NRF stores registration information of the PCF and the PCF selection reference information, the PCF selection reference information includes at least one of the XRM service indication information and the XRM group identifier, and the NRF marks the PCF as an available PCF.

In an embodiment, the processing unit 101 selects the same PCF for the terminal(s) supporting the same XRM service capability or the same XRM group ID includes:
in response to a presence of a terminal with an already selected PCF among the terminal(s) supporting the same XRM service capability or the same XRM group ID, using the already selected PCF as the PCF for the terminal(s) supporting the same XRM service capability or the same XRM group identifier.

In an embodiment, the processing unit 101 selects the same PCF for the terminal(s) supporting the same XRM service capability or the same XRM group ID by:
in response to an absence of a terminal with an already selected PCF among the terminal(s) supporting the same XRM service capability or the same XRM group ID, selecting the PCF on the basis of a PCF selection policy, and using the PCF selected as the PCF for the terminal(s) supporting the same XRM service capability or the same XRM group ID.

In an embodiment, the processing unit 101 is also configured to perform a terminal policy association for a terminal with an already selected PCF, and use the already selected PCF as the PCF for other terminals associated with the terminal performing the terminal policy association.

In an embodiment, the apparatus 100 for processing a service also includes a sending unit 102, where the sending unit 102 is configured to send, to the PCF, an access management (AM) policy control association creation request message, where the AM policy control association creation request message includes at least one of the XRM service indication information and the XRM group ID.

In an embodiment, the apparatus 100 for processing a service also includes a receiving unit 103, where the sending unit 103 is configured to: receive at least one of the following messages sent by the PCF:
an AM policy control association creation response message;
access and mobility policy association information;
policy control request for an AM policy association;
an event subscription report.

In an embodiment, the processing unit 101 is configured to install access and mobility policy association information, and subscribe a policy control trigger request upon receiving a subscription request.

In an implementation, the apparatus for processing a service also includes a sending unit 102, where the sending unit 102 is configured to send at least one of the following to a radio access network:
a radio access type frequency selection priority index;
a user equipment aggregated maximum bit rate;
a list of user equipment-slice- maximum bit rate;
a service area restriction.

In an embodiment, the PCF includes a local PCF or a roaming PCF.

In an embodiment, the XRM service indication information includes multiple different pieces of XRM service indication information of the same terminal.

FIG. 9 is a block diagram illustrating an apparatus for processing a service according to an exemplary embodiment. Referring to Figure 9, the apparatus 200 for processing a service is applied to a PCF, includes a receiving unit 201.

The receiving unit 201, is used to receive an AM policy control association creation request message sent by an AMF, wherein the AM policy control association creation request message includes at least one of XRM service indication information and an XRM group identifier.

In an implementation, the apparatus 200 for processing a service also includes a sending unit 202, where the sending unit 202 is configured to send at least one of the following messages to the AMF: an AM policy control association creation response message; access and mobility policy association information; a policy control request for an AM policy association; an event subscription report.

In an implementation, the apparatus 200 for processing a service also includes a sending unit 202, where the sending unit 202 is configured to send a registration request to a NRF, where the NRF includes PCF related information.

In an implementation, the apparatus 200 for processing a service also includes a sending unit 202, where the sending unit 202 is configured to send the access and mobility policy association information, to a BSF, where the access and mobility policy association information includes at least one of a terminal identifier, a PCF identifier, the XRM service indication information and the XRM group identifier.

FIG. 10 is a block diagram illustrating an apparatus 300 for processing a service according to an exemplary embodiment. Referring to Figure 10, the apparatus 300 for processing a service is applied to a NRF and includes a processing unit 301 and a sending unit 302.

The processing unit 301, is configured to select a PCF based on at least one of an XRM service indication information and an XRM group identifier; a sending unit 302 is configured to send the PCF selected to an AMF.

In an implementation, the processing unit 301 selects a PCF based on at least one of XRM service indication information and an XRM group ID by: selecting the PCF based on configuration information, wherein the configuration information includes at least one of the XRM service indication information and the XRM group ID; or selecting the PCF based on subscription data, wherein the subscription data includes at least one of the XRM service indication information and the XRM group ID

In an implementation, the apparatus 300 for processing a service also includes a receiving unit 303, where the receiving unit 303 is configured to receive a registration request of the PCF, where the registration request includes PCF related information.

In an implementation, the processing unit 303 is configured to store registration information of the PCF and PCF selection reference information, and mark the PCF as an available PCF, where the PCF selection reference information includes at least one of the XRM service indication information and the XRM group ID.

Regarding the apparatus in the above embodiments, the specific ways in which each module performs operations have been described in detail in the relevant embodiments of the method, and will not be illustrated here.

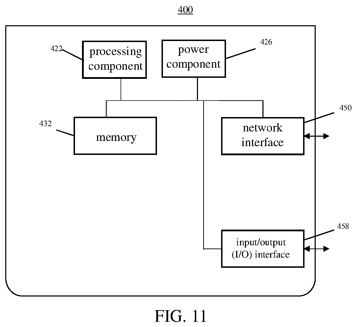

Figure 11 is a block diagram illustrating an apparatus 400 for processing a service according to an exemplary embodiment. For example, the apparatus 400 can be provided as a server. Referring to Figure 11, the apparatus 400 includes a processing component 422, where the apparatus 400 further includes one or more processors, as well as memory resources represented by a memory 432, for storing a instruction that can be executed by the processing component 422, such as application programs. The application program stored in the memory 432 may include one or more modules each corresponding to a set of instructions. In addition, the processing component 422 is configured to execute the instruction to perform the methods described above.

The apparatus 400 may also include a power component 426 configured to perform a power management of the apparatus 400, a wired or wireless network interface 450 configured to connect the apparatus 400 to a network, and an input/output (I/O) interface 458. The apparatus 400 can operate an operating system based on stored in memory 432, such as Windows ServerTM, Mac OS XTM, UnixTM, LinuxTM, FreeBSDTM, or similar.

In an exemplary embodiment, a non-temporary computer-readable storage medium including an instruction is also provided, such as the memory 432 including the instruction, where the above instruction may be executed by the processing component 422 of apparatus 400 to complete the above method For example, the non-temporary computer-readable storage medium may be ROM, random access memory (RAM), CD-ROM, magnetic tape, floppy disk, and optical data storage devices.

It should be understood that the term "plurality" in the present disclosure refers to two or more than two, and other quantifiers are similar. The term "and/or" describes the association relationship of associated objects, indicating that there may be three types of relationships, for example, A and/or B may indicate: A exists alone, A and B exist simultaneously, and B exists alone. The character "/" generally indicates that the associated objects have an "or" relationship. The singular forms of 'one', 'said', and 'this' are also intended to include the majority form, unless the context clearly indicates otherwise.

It can be further understood that the terms "first", "second", etc. are used to describe various information, but these information should not be limited to these terms. These terms are only used to distinguish information of the same type from each other and do not indicate a specific order or level of importance. In fact, expressions such as "first" and "second" can be used interchangeably. For example, without departing from the scope of this disclosure, the first information may also be referred to as the second information, and similarly, the second information may also be referred to as the first information.

It can be further understood that although the operations are described in a specific order in the accompanying drawings in the present disclosed embodiment, it should not be understood as requiring the execution of these operations in the specific order or serial order shown, or requiring the execution of all the operations shown to achieve the desired results. In a specific environment, multitasking and parallel processing may be advantageous.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for processing a service, performed by an access and mobility management function (AMF), comprising:
determining policy control function (PCF) selection reference information, wherein the PCF selection reference information comprises at least one of extended reality media (XRM) service indication information and an XRM group identifier;
selecting a PCF based on at least one of the XRM service indication information and the XRM group identifier.

2. The method according to claim 1, wherein selecting a PCF based on at least one of the XRM service indication information and the XRM group identifier comprises:
determining a terminal supporting the same XRM service capability or the same XRM group identifier, based on at least one of the XRM service indication information and the XRM group identifier;
selecting the same PCF for the terminal(s) supporting the same XRM service capability or the same XRM group identifier.

3. The method according to claim 1 or 2, wherein selecting a PCF based on at least one of the XRM service indication information and the XRM group identifier comprises:
selecting the PCF based on a local policy, wherein the local policy comprises at least one of the XRM service indication information and the XRM group identifier; or
obtaining subscription data, and selecting the PCF based on the subscription data, wherein the subscription data comprises at least one of the XRM service indication information and the XRM group identifier.

4. The method according to claim 1 or 2, wherein selecting a PCF based on at least one of the XRM service indication information and the XRM group identifier comprises:
obtaining the PCF selected by a network repository function (NRF) based on configuration information, wherein the configuration information comprises at least one of the XRM service indication information and the XRM group identifier; or
obtaining the PCF selected by the NRF based on the subscription data, wherein the subscription data comprises at least one of the XRM service indication information and the XRM group identifier.

5. The method according to claim 4, wherein the NRF stores registration information of the PCF and the PCF selection reference information, the PCF selection reference information comprises at least one of the XRM service indication information and the XRM group identifier, and the NRF marks the PCF as an available PCF.

6. The method according to claim 2, wherein selecting the same PCF for the terminal(s) supporting the same XRM service capability or the same XRM group identifier comprises:
in response to a presence of a terminal with an already selected PCF among the terminal(s) supporting the same XRM service capability or the same XRM group identifier, taking the already selected PCF as the PCF for the terminal(s) supporting the same XRM service capability or the same XRM group identifier.

7. The method according to claim 2, wherein selecting the same PCF for the terminal(s) supporting the same XRM service capability or the same XRM group identifier, comprises:
in response to an absence of a terminal with an already selected PCF among the terminal(s) supporting the same XRM service capability or the same XRM group identifier, selecting the PCF on the basis of a PCF selection policy, and taking the PCF selected as the PCF for the terminal(s) supporting the same XRM service capability or the same XRM group identifier.

8. The method according to claim 1, further comprising:
performing a terminal policy association for a terminal with an already selected PCF, and taking the already selected PCF as the PCF for another terminal, wherein the terminal policy association is performed for the another terminal.

9. The method according to any one of claims 1 to 8, further comprising:
sending, to the PCF, an access management (AM) policy control association creation request message, wherein the AM policy control association creation request message comprises at least one of the XRM service indication information and the XRM group identifier.

10. The method according to any one of claims 1 to 9, further comprising:
receiving at least one of the following messages sent by the PCF:
an AM policy control association creation response message;
access and mobility policy association information;
a policy control request for an AM policy association;
an event subscription report.

11. The method according to any one of claims 1 to 10, further comprising:
installing the access and mobility policy association information, and subscribing a policy control trigger request upon receiving a subscription request.

12. The method according to any one of claims 1 to 10, further comprising:
sending at least one of the following to a radio access network:
a radio access type frequency selection priority index;
a user equipment-aggregated maximum bit rate;
a list of user equipment-slice-maximum bit rate;
a service area restriction.

13. The method according to any one of claims 1 to 12, wherein the PCF comprises a local PCF or a roaming PCF.

14. The method according to any one of claims 1 to 13, wherein the XRM service indication information comprises multiple different pieces of XRM service indication information of the same terminal.

15. A method for processing a service, performed by a PCF, comprising:
receiving an AM policy control association creation request message sent by an AMF, wherein the AM policy control association creation request message comprises at least one of XRM service indication information and an XRM group identifier.

16. The method according to claims 15, further comprising:
sending at least one of the following messages to the AMF:
an AM policy control association creation response message;
access and mobility policy association information;
a policy control request for an AM policy association;
an event subscription report.

17. The method according to claim 15 or 16, further comprising:
sending a registration request to a NRF, wherein the registration request comprises PCF related information.

18. The method according to any one of claims 15 to 17, further comprising:
sending the access and mobility policy association information to a binding support function (BSF), wherein the access and mobility policy association information comprises at least one of a terminal identifier, a PCF identifier, an XRM service indication information and the XRM group identifier.

19. A method for processing a service, performed by a NRF, comprising:
selecting a PCF based on at least one of XRM service indication information and an XRM group identifier;
sending the PCF selected to an AMF.

20. The method according to claim 19, wherein selecting a PCF based on at least one of XRM service indication information and an XRM group identifier comprises:
selecting the PCF based on configuration information, wherein the configuration information comprises at least one of the XRM service indication information and the XRM group identifier; or
selecting the PCF based on subscription data, wherein the subscription data comprises at least one of the XRM service indication information and the XRM group identifier.

21. The method according to claim 19 or 20, further comprising:
receiving a registration request of the PCF, wherein the registration request comprises PCF related information.

22. The method according to claim 21, further comprising:
storing registration information of the PCF and PCF selection reference information, and marking the PCF as an available PCF, wherein the PCF selection reference information comprises at least one of the XRM service indication information and the XRM group identifier.

23. An apparatus for processing a service, comprising:
a processor;
a memory for storing executable instructions for the processor,
wherein the processor is configured to perform the method according to any one of claims 1 to 13.

24. An apparatus for processing a service, comprising:
a processor;
a memory for storing executable instructions for the processor,
wherein the processor is configured to perform the method according to any one of claims 15 to 18.

25. An apparatus for processing a service, comprising:
a processor;
a memory for storing executable instructions for the processor,
wherein the processor is configured to perform the method according to any one of claims 19 to 22.
